# EUROPEAN PATENT SPECIFICATION

(11) **EP 4 322 477 B1**
(45) Date of publication and mention of the grant of the patent: **24.12.2025**
(21) Application number: 23190025.9
(22) Date of filing: 07.08.2023
(51) Int. Cl.: H04L 9/40, H04W 12/06, H04W 12/08

(54) **MECHANISM TO ENABLE AUTHORIZATION OF NETWORK FUNCTION ACTING AS FEDERATED LEARNING CLIENTS AND FEDERATED LEARNING SERVERS IN 5G CORE**
MECHANISMUS ZUR ERMÖGLICHUNG DER AUTORISIERUNG EINER NETZWERKFUNKTION ALS FÖDERIERTE LERNCLIENTS UND FÖDERIERTE LERNSERVER IN 5G-KERN
MÉCANISME POUR PERMETTRE L'AUTORISATION D'UNE FONCTION DE RÉSEAU AGISSANT COMME DES CLIENTS D'APPRENTISSAGE FÉDÉRÉ ET DES SERVEURS D'APPRENTISSAGE FÉDÉRÉ DANS UN C UR 5G

(30) Priority: 10.08.2022 US 202263371011 P
(43) Date of publication of application: 14.02.2024
(73) Proprietor: Nokia Technologies Oy, 02610 Espoo (FI)
(72) Inventor: AGGARWAL, Chaitanya, Munich (DE); KHARE, Saurabh, Bangalore (IN); PEINADO GOMEZ, German, Warsaw (PL)
(74) Representative: Samson & Partner Patentanwälte mbB

(56) References cited:
- WO-A1-2022/018581
- US-A1- 2022 038 349
- US-A1- 2022 116 400

## Description

### TECHNICAL FIELD

Example embodiments disclosed herein relate to a mechanism to enable authorization of network function acting as federated learning clients and federated learning servers in 5G core.

### BACKGROUND

In 5G networks federated learning (FL) may be used among network data analytics functions (NWDAF). Federated learning is a machine learning technique that trains an algorithm across multiple decentralized edge devices or servers holding local data samples, without exchanging the local data. This approach stands in contrast to traditional centralized machine learning techniques where all the local datasets are uploaded to one server, as well as to more classical decentralized approaches which often assume that local data samples are identically distributed. Federated learning enables multiple actors to build a common, robust machine learning model without sharing data, thus allowing to address critical issues such as data privacy, data security, data access rights, and access to heterogeneous data.

To ensure security in such 5G networks, WO 2022/018571 A1 presents techniques for preventing rogue network functions and focuses on identifying entities that are suspected of malicious activity. However, no authorization of network functions for federated learning has been discussed there.

### SUMMARY

The invention is defined in the independent claims. Particular embodiments are set out in the dependent claims.

A summary of various exemplary embodiments is presented below. Some simplifications and omissions may be made in the following summary, which is intended to highlight and introduce some aspects of the various exemplary embodiments. Detailed descriptions of an exemplary embodiment adequate to allow those of ordinary skill in the art to make and use the inventive concepts will follow in later sections.

Various embodiments relate to a network repository function apparatus configured to implement an authorization mechanism for a federated learning (FL) training process, comprising means for receiving from a network data analytics function (NWDAF) NWDAF FL profile data including a FL process role parameter; receiving an access token from the FL server for the NWDAF that is the potential FL client; determining if the access token request is authorized for the NWDAF based upon the FL profile data; and sending the access token for the NWDAF to the FL server when the access token for the NWDAF is authorized.

Further various embodiments relate to a home public land mobile network (HPLMN) of a 5G core network configured to implement an authorization mechanism for a federated learning (FL) training process comprising a network repository function (NRF), and a network data analytics function (NWDAF), wherein the HPLMN is characterized by that the NRF is configured to receive, from the NWDAF, NWDAF FL profile data including a FL process role parameter, receive, from an FL server in a visiting public land mobile network (VPLMN), an access token for the NWDAF that is a potential FL client, determine if the access token is authorized for the NWDAF based upon the FL profile data, and send, to the FL server, the access token for the NWDAF when the access token for the NWDAF is authorized.

Further various embodiments relate to a method performed by a network repository function to implement an authorization mechanism for a federated learning (FL) training process, comprising receiving from a network data analytics function (NWDAF) NWDAF FL profile data including a FL process role parameter; receiving an access token from the FL server for the NWDAF that is the potential FL client; determining if the access token request is authorized for the NWDAF based upon the FL profile data; and sending the access token for the NWDAF to the FL server when the access token for the NWDAF is authorized.

Further aspects are defined by the dependent claims.

### BRIEF DESCRIPTION OF THE DRAWINGS

Additional objects and features of the invention will be more readily apparent from the following detailed description and appended claims when taken in conjunction with the drawings. Although several example embodiments are illustrated and described, like reference numerals identify like parts in each of the figures in the following list.
FIG. 1 illustrates a portion of the 5G core network that provides network data analytics services.
FIG. 2 illustrates an implementation of an authorization mechanism in the 5G core.
FIG. 3 illustrates an exemplary hardware diagram for implementing the authorization mechanism.

To facilitate understanding, identical reference numerals have been used to designate elements having substantially the same or similar structure and/or substantially the same or similar function.

### DETAILED DESCRIPTION

It should be understood that the figures are merely schematic and are not drawn to scale. It should also be understood that the same reference numerals are used throughout the figures to indicate the same or similar parts.

Further various embodiments relate to a unified data management (UDM) apparatus configured to implement an authorization mechanism for a federated learning (FL) training process, including: at least one processor; at least one data storage; and at least one memory storing instructions, that when executed by the at least one processor, cause the apparatus at least to: store a visiting public land mobile network (VPLMN) consent parameter in the data storage, wherein the VPLMN consent parameter indicates whether a VPLMN is authorized; store a VPLMN analytics consent parameter that indicates whether a network data analytics function (NWDAF) is authorized to share analytics data with the VPLMN; receive from the NWDAF a consent request; and send to the NWDAF a consent flag indicating whether the NWDAF is authorized to share analytics data with a FL server.

Further various embodiments relate to a method performed by a network repository function to implement an authorization mechanism for a federated learning (FL) training process, including: receiving from a network data analytics function (NWDAF) NWDAF FL profile data including a FL process role parameter; receiving a FL discovery request from a FL server in a visiting public land mobile network (VPLMN) including an analytics ID; sending information to the FL server regarding a NWDAF that is a potential FL client; receiving an access token from the FL server for the NWDAF that is the potential FL client; determining if the FL discovery request is authorized for the NWDAF based upon the FL profile data; and sending an access token for the NWDAF to the FL server when discovery request for the NWDAF is authorized.

Various embodiments are described, wherein the NWDAF FL profile data includes an allowed FL server parameter that indicates that the NWDAF may share analytics data associated with the analytics ID with the indicated FL server.

Various embodiments are described, wherein the NWDAF FL profile data includes an allowed PLMN parameter that indicates that the NWDAF may share analytics data associated with the analytics ID with a FL server in the PLMN.

Various embodiments are described, wherein the NWDAF FL profile data includes an data sensitivity parameter that indicates a data sensitivity level associated with the analytics ID.

Various embodiments are described, wherein the NWDAF FL profile data includes a data privacy parameter that indicates whether the analytics data associated the analytics ID is private.

Various embodiments are described, further comprising sending access token request rejection for the NWDAF to the FL server when discovery request for the NWDAF is not authorized.

### BRIEF DESCRIPTION OF THE DRAWINGS

Additional objects and features of the invention will be more readily apparent from the following detailed description and appended claims when taken in conjunction with the drawings. Although several example embodiments are illustrated and described, like reference numerals identify like parts in each of the figures in the following list.

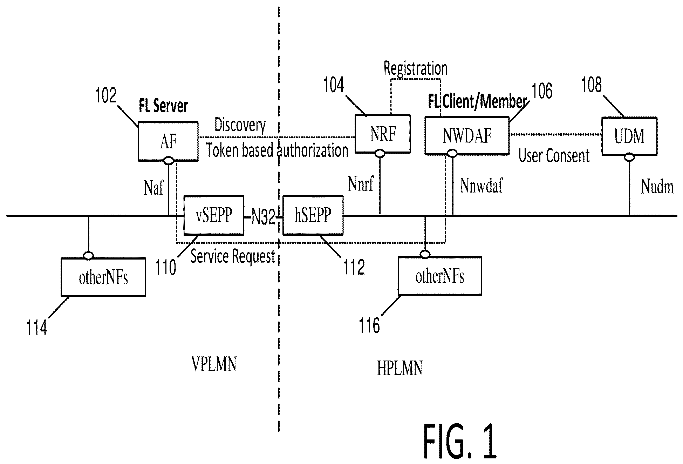

FIG. 1 illustrates a portion of the 5G core network that provides network data analytics services.

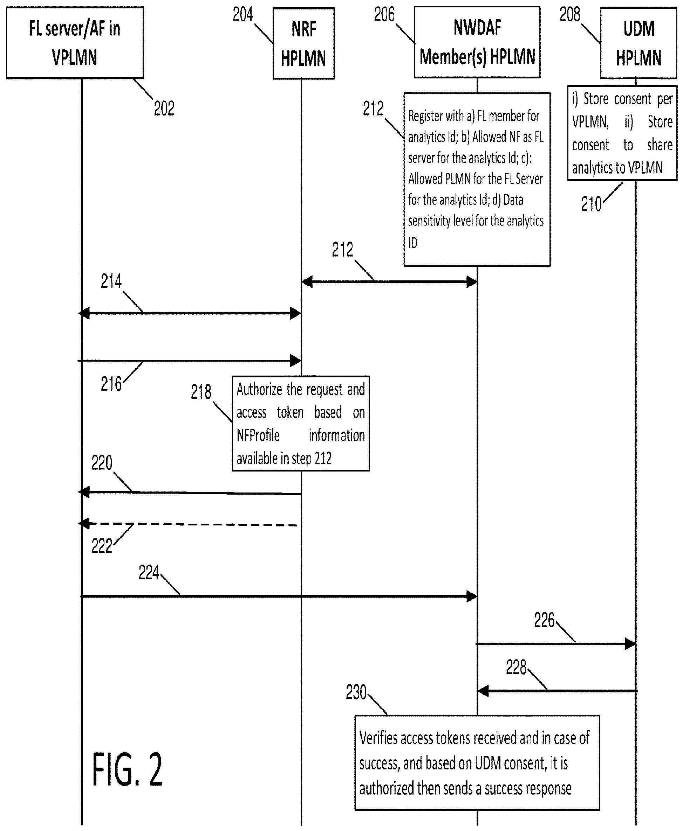

FIG. 2 illustrates an implementation of an authorization mechanism in the 5G core.

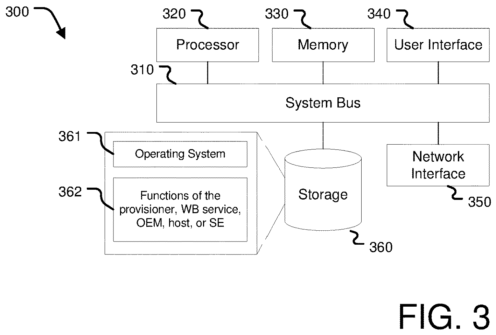

FIG. 3 illustrates an exemplary hardware diagram for implementing the authorization mechanism.

To facilitate understanding, identical reference numerals have been used to designate elements having substantially the same or similar structure and/or substantially the same or similar function.

### DETAILED DESCRIPTION

It should be understood that the figures are merely schematic and are not drawn to scale. It should also be understood that the same reference numerals are used throughout the figures to indicate the same or similar parts.

The descriptions and drawings illustrate the principles of various example embodiments. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various example embodiments described herein are not necessarily mutually exclusive, as some example embodiments can be combined with one or more other example embodiments to form new example embodiments. Descriptors such as "first," "second," "third," etc., are not meant to limit the order of elements discussed, are used to distinguish one element from the next, and are generally interchangeable. Values such as maximum or minimum may be predetermined and set to different values based on the application.

Federated learning (FL) may be used among network data analytics functions (NWDAF) in 5G networks to develop machine learning models trained using varous data analytics from the NWDAFs. FL uses a FL server that collects and consumes data from FL clients. The FL server is able to develop a machine learning model based upon the data analytics from various NWDAFs. The application of FL to data analytics in the 5G core leads to a better machine learning model. It also allows for the analytics data at the various NWDAFs to remain private and secure. In order to implement FL in the 5G core, a mechanism that enables authorization of NWDAFs to operate as FL servers and FL clients is needed. This mechanism also will operate in roaming situations. As a result, a security issue exists that will be addressed by embodiments of an autoritzation mechanism.

Currently there is no authorization mechanism defined in SA3 to ensure that the NWDAF instance acting as a FL server is authorized to consume resources, e.g., sensitive data, of NWDAF instances acting as FL clients to train the model. Thus, the NWDAF FL client may be able to authorize its use as FL client for a particular FL server based on different premises, for example provided that sensitive data (e.g., privacy of subscribers) is not leaked.

The existing specified OAuth 2.0 framework, which uses authorization tokens to provide identity between consumers and service providers, is not sufficient to determine which NWDAF is authorized to work as a FL server and which NWDAF may work as a FL client, and how NWDAF may consume data from other NWDAFs located in different public land mobile networks (PLMNs) for FL purposes.

Another problem addressed by the embodiment of the authorization mechanism described herein relates to user consent. A user consent feature currently may be defined as a flag in a unified data management (UDM), where users may indicate whether or not they want their data to be consumed for analytics. However, other more recent specification iterations open a door for roaming where a NWDAF in a home PLMN (HPLMN) may collect data from a visited PLMN (VPLMN) and even use the VPLMN NWDAF to work as an FL client for FL use cases. However, the current user consent specified feature will not be sufficient to handle those scenarios.

The user consent aspect is also an important aspect because, in the case of FL, the model training is performed on the local data of the FL clients. Therefore, when the FL server does not have appropriate consent/authorizations to consume the local data of FL clients, there will be an immediate security breach, because the FL server could still send a request to FL clients to perform machine learning model training.

An authorization mechanism for FL server(s) to consume the resources and data of the NWDAFs acting as FL clients, based upon the FL role information and the analytics ID and data details registered at the network repository function (NRF) during the network function (NF) profile registration phase will now be described. Further, the authorization mechanism may also enhance user consent aspects. FIG. 1 illustrates a portion of the 5G core network that provides network data analytics services. The 5G network is implemented using a Service-Based Architecture (SBA) where various software services may be implemented in a cloud computing environment. The SBA provides a modular framework from which common applications can be deployed using components of varying sources and suppliers. The 3GPP defines a SBA, whereby the control plane functionality and common data repositories of a 5G network are delivered by way of a set of interconnected Network Functions (NFs), each with authorization to access each other's services. Assuming the role of either service consumer or service producer, NFs are self-contained, independent and reusable. Each NF service exposes its functionality through a Service Based Interface (SBI).

In FIG. 1, the network is divided into a VPLMN and a HPLMN. The VPLMN includes Application Function (AF) 102, visited Security Edge Protection Proxy (vSEPP) 110, and other NFs 114. The AF 102 may act as the FL server as will be described further below. The Security Edge Protection Proxy (SEPP) enables secure interconnect between 5G networks. The SEPP ensures end-to-end confidentiality and/or integrity between source and destination network for all 5G interconnect roaming messages. The VPLMN may include other NFs 114 that perform various functions.

The HPLMN includes NRF 104, NWADF 106, UDM 108, home SEPP (hSEPP) 112, and other NFs 116. The SBA employs a centralized discovery framework that leverages the NRF 104. The NRF 104 maintains a record of available NF instances and their supported services. It allows other NF instances to subscribe and be notified of registrations from NF instances of a given type. The NRF 104 supports service discovery, by receipt of Discovery Requests from NF instances and details which NF instances support specific services.

The NWDAF 106 is a network function that collects data from 5G Core network functions, performs network analytics, and provides insights with closed loop automation to authorized data consumers. These include external users taking advantage of open application programming interfaces (APIs) to help generate greater insight to network performance. The NWDAF makes analytics available where needed to meet the varying latency requirements of 5G use cases. This approach to collect, analyze, and expose data allows service providers to manage, automate, and optimize their 5G network operations much more efficiently. The NWDAF architecture is a cloud-native, multi-vendor capable, and probeless solution, making it easy to collect and analyze data from networks and services. The data collected and provided by the NWDAFs 106 may be used to train machine learning models using FL to model various aspects of the 5G network.

The UDM 108 is a converged repository of subscriber information used to service a number of NFs. The HPLMN may include other NFs 116 that perform various functions. The hSEPP 112 is a home SEPP. In FIG. 1 labelled dashed lines illustrate the various step of an embodiment of an authorization mechanism that will be further described below.

FIG. 2 illustrates an implementation of an authorization mechanism in the 5G core. The 5G core may include a NRF 204 in a HPLMN, NWDAF member(s) 206 in the HPLMN, and a UDM 208 in the HPLMN. A VPLMN may include a FL server/AF 202 in a VPLMN. In this configuration, the FL server/AF 202 is in a VPLMN and will act as the FL server that develops a machine learning model. Part of the data to be used to train the machine learning model may be found on NWDAF(s) 206 found in a HPLMN.

The various steps carried out by the FL server/AF 204, NRF 204, NWDAF member(s) 206, and the UDM 208 will now be described. As a precondition the UDM 208 stores 210 the consent per VPLMN for each user and/or group of users. This indicates whether a user's data may be shared with specific VPLMNs. The UDM 208 stores 210 consent to share analytics to specific VPLMNs. This is a new feature implemented by the embodiment of the authorization mechanism. This allows for a user to determine which VPLMNs its analytic data will be shared with. This allows for the enforcement of governmental regulations regarding data sharing, prevents data from being shared with competitors, allows the user to limit the dissemination of its analytic data in any way, *etc.* As discussed below this stored information will be used in an optional consent check regarding the requested analytic data.

Next, NWDAF FL Member(s) 206 register the following new attributes with the NRF 204:
FL Process Role: This indicates if the NWDAF registers as a FL server or as a FL client for a particular analytics ID. Note, that if the NWDAF registers as a FL client, it will also provide specific analytics ID(s) that may be provided as a FL client.
Allowed FL Server for a particular analytics ID: This may include an NF Type and Instance ID. This may be used when the NWDAF/AF has registered as a FL Client in the NRF 204.
Allowed PLMN for the FL server for the analytics ID: This value identifies which PLMN's FL servers may receive analytics data associated with the analytics ID.
Callback uniform resource identifier (URI)/Service: this allows for the receipt of the shared secret for the FL Member registered as FL Client.
Data details: This might include data sensitivity level, e.g., high, medium, low, and/or data privacy (yes/no) of the data used to perform the training or analysis per analytics ID.

Next, the FL server/AF 202 may initiate 214 a discovery request for potential FL members to the NRF 204. This request may request analytics data associated with specific analytics IDs. The NRF 204 may then indicate 214 to the FL server/AF 202 that it has potential FL members associated with the specific analytics ID. Information for these NWDAF(s) that are potential FL members may be sent to the FL server/AF 202. The FL server/AF 202 then sends 216 an access token for each NWDAF that is a potential FL client based upon the specified analytics ID(s).

The NRF 204 next authorizes 218 the request of the FL Server/AF 202 based upon the information registered in the NF profile in step 212. The NRF 204 also authorizes the received access tokens for each NWDAF that is a potential FL client. Furthermore, in case of high/medium data sensitivity or when the data sensitivity exceeds a specified sensitivity threshold, the NRF 204 may also check the FL server/AF 202 (or the VPLMN associated with the FL server/AF 202) trust rating to determine whether the FL server/AF 202 should be authorized to initiate FL training or not by the trust rating exceeding a trust rating threshold value. To determine a trust score, the NRF 202 may query a common database where trust index/evaluation has been stored for the FL server/AF or its associated VPLMN from where the request has been received.

If the FL Server/AF 202 is authorized by the NRF 204 to request NWDAF FL Clients to perform the FL operations, then the NRF 204 provides 220 the access tokens for authorized NWDAF Member(s). Otherwise, the NRF 204 rejects the token request 222.

Then the FL server/AF 202 may send 224 a FL service request directly to the NWDAF(s) 206 that have been authorized to act as FL clients. The access request 224 may include an access token, model parameters, model ID, *etc.*

The NWDAF 206 may then determine if the data associated with the analytics ID to be used in carrying out the FL request is very sensitive, *i.e.,* if the data sensitivity is in certain categories or if a sensitivity value exceeds a sensitivity threshold. The NWDAF 206 may send 226 a consent request to the UDM 208 that may include details about the FL server/AF 202 and it's VPLMN. The UDM 208 may use this consent request to determine if there is user consent to share the data associated with the analytics ID with the VPLMN making the FL request. This determination may use the consent per VPLMN stored above in step 210. The UDM 208 then may return 228 a consent flag to the NWDAF 206 as a response. The consent flag indicates whether the NWDAF 206 may carry out the received FL service request. Note that steps 226 and 228 may be carried out after step 216 in other embodiments. This approach can then stop the process if the use does not provide consent to access the request analytics data.

Next, the NWDAF 206 verifies the access tokens received and if the UDM 208 has provided user consent, the NWDAF 206 sends a success response 230. The NWDAF 206 then then retrieves the analytics data associated with the analytics ID. This retrieved data is then used to further train the FL machine learning model. Next, the NWDAF 206 returns the updated model parameters to the FL server/AF 202.

FIG. 3 illustrates an exemplary hardware diagram 300 for implementing the authorization mechanism. The exemplary hardware 300 may correspond to FL server/AF 202, NRF 204, NWDAF 206, or UDM of FIG. 2. As shown, the device 300 includes a processor 320, memory 330, user interface 340, network interface 350, and storage 360 interconnected via one or more system buses 310. It will be understood that FIG. 3 constitutes, in some respects, an abstraction and that the actual organization of the components of the device 300 may be more complex than illustrated.

The processor 320 may be any hardware device capable of executing instructions stored in memory 330 or storage 360 or otherwise processing data. As such, the processor may include a microprocessor, microcontroller, graphics processing unit (GPU), neural network processor, field programmable gate array (FPGA), application-specific integrated circuit (ASIC), or other similar devices.

The memory 330 may include various memories such as, for example L1, L2, or L3 cache or system memory. As such, the memory 330 may include static random-access memory (SRAM), dynamic RAM (DRAM), flash memory, read only memory (ROM), or other similar memory devices.

The user interface 340 may include one or more devices for enabling communication with a user such as an administrator. For example, the user interface 340 may include a display, a touch interface, a mouse, and/or a keyboard for receiving user commands. In some embodiments, the user interface 340 may include a command line interface or graphical user interface that may be presented to a remote terminal via the network interface 350.

The network interface 350 may include one or more devices for enabling communication with other hardware devices. For example, the network interface 350 may include a network interface card (NIC) configured to communicate according to the Ethernet protocol or other communications protocols, including wireless protocols. Additionally, the network interface 350 may implement a **TCP/IP** stack for communication according to the **TCP/IP** protocols. Various alternative or additional hardware or configurations for the network interface 350 will be apparent.

The storage 360 may include one or more machine-readable storage media such as read-only memory (ROM), random-access memory (RAM), magnetic disk storage media, optical storage media, flash-memory devices, or similar storage media. **In** various embodiments, the storage 360 may store instructions for execution by the processor 320 or data upon with the processor 320 may operate. For example, the storage 360 may store a base operating system 361 for controlling various basic operations of the hardware 300. Stoage 362 may include instructions for implement the authorization mechanism described herein.

**It** will be apparent that various information described as stored in the storage 360 may be additionally or alternatively stored in the memory 330. **In** this respect, the memory 330 may also be considered to constitute a "storage device" and the storage 360 may be considered a "memory." Various other arrangements will be apparent. Further, the memory 330 and storage 360 may both be considered to be "non-transitory machine-readable media." As used herein, the term "non-transitory" will be understood to exclude transitory signals but to include all forms of storage, including both volatile and non-volatile memories.

The system bus 310 allows communication between the processor 320, memory 330, user interface 340, storage 360, and network interface 350.

While the host device 300 is shown as including one of each described component, the various components may be duplicated in various embodiments. For example, the processor 320 may include multiple microprocessors that are configured to independently execute the methods described herein or are configured to perform steps or subroutines of the methods described herein such that the multiple processors cooperate to achieve the functionality described herein. Further, where the device 300 is implemented in a cloud computing system, the various hardware components may belong to separate physical systems. For example, the processor 320 may include a first processor in a first server and a second processor in a second server. Further, the authorization mechanism may be implemented using cloud computing to carry out the various functions described above.

The autorization mechanism described herein allows for a FL server to be implmeneted on one PLMN and then seek to train the FL machine learning model using FL clients on a different PLMN. This allows the FL server to gain wider access to potential training data with improves the overall FL machine learning model. Further, the privacy of the data on the FL clients is protected, and the users are able to specify what systems use its data.

In accordance with one or more of the aforementioned embodiments, the methods, processes, and/or operations described herein may be performed by code or instructions to be executed by a computer, processor, controller, or other signal processing device. The computer, processor, controller, or other signal processing device may be those described herein or one in addition to the elements described herein. Because the algorithms that form the basis of the methods (or operations of the computer, processor, controller, or other signal processing device) are described in detail, the code or instructions for implementing the operations of the method embodiments may transform the computer, processor, controller, or other signal processing device into a special-purpose processor for performing the methods described herein.

Also, another embodiment may include a computer-readable medium, e.g., a non-transitory computer-readable medium, for storing the code or instructions described above. The computer-readable medium may be a volatile or non-volatile memory or other storage device, which may be removably or fixedly coupled to the computer, processor, controller, or other signal processing device which is to execute the code or instructions for performing the operations of the system and method embodiments described herein.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Although the various exemplary embodiments have been described in detail with particular reference to certain exemplary aspects thereof, it should be understood that the invention is capable of other example embodiments and its details are capable of modifications in various obvious respects. As is apparent to those skilled in the art, variations and modifications can be affected. The embodiments may be combined to form additional embodiments. Accordingly, the foregoing disclosure, description, and figures are for illustrative purposes only and do not in any way limit the invention, which is defined by the claims. The embodiments may be combined to form additional embodiments.

## Claims

1. A network repository function apparatus (104, 204) configured to implement an authorization mechanism for a federated learning, FL, training process, **characterized by** comprising means for:
receiving from a network data analytics function, NWDAF (106, 206), NWDAF FL profile data including a FL process role parameter;
receiving an access token request from an FL server (102, 202) for the NWDAF (106, 206) that is a potential FL client;
determining if the access token request is authorized for the NWDAF (106, 206) based upon the FL profile data; and
sending an access token for the NWDAF (106, 206) to the FL server (102, 202) when the access token request for the NWDAF (106, 206) is authorized.

2. The network repository function apparatus (104, 204) of claim 1, wherein the NWDAF FL profile data includes an allowed FL server parameter that indicates that the NWDAF (106, 206) may share analytics data associated with an analytics ID with the allowed FL server (102, 202).

3. The network repository function apparatus (104, 204) of claim 1, wherein the NWDAF FL profile data includes an allowed PLMN parameter that indicates that the NWDAF (106, 206) may share analytics data associated with an analytics ID with a FL server (102, 202) in the allowed PLMN.

4. The network repository function apparatus (104, 204) of claim 1, wherein the NWDAF FL profile data includes a data sensitivity parameter that indicates a data sensitivity level associated with an analytics ID.

5. The network repository function apparatus (104, 204) of claim 1, wherein the NWDAF FL profile data includes a data privacy parameter that indicates whether analytics data associated an analytics ID is private.

6. The network repository function apparatus (104, 204) of claim 1, further comprising means for:
sending an access token request rejection for the NWDAF (106, 206) to the FL server (102, 202) when the access token request for the NWDAF (106, 206) is not authorized.

7. A home public land mobile network, HPLMN, of a 5G core network configured to implement an authorization mechanism for a federated learning, FL, training process comprising:
a network repository function, NRF (104, 204); and
a network data analytics function, NWDAF (106, 206);
wherein the HPLMN is **characterized by** that the NRF (104, 204) is configured to:
receive, from the NWDAF (106, 206), NWDAF FL profile data including a FL process role parameter;
receive, from an FL server (102, 202) in a visiting public land mobile network (VPLMN), an access token request for the NWDAF (106, 206) that is a potential FL client;
determine if the access token request is authorized for the NWDAF (106, 206) based upon the FL profile data; and
send, to the FL server (102, 202), an access token for the NWDAF (106, 206) when the access token request for the NWDAF (106, 206) is authorized.

8. The HPLMN of claim 7, wherein the NWDAF FL profile data includes an allowed FL server parameter that indicates that the NWDAF (106, 206) may share analytics data associated with an analytics ID with the allowed FL server (102, 202).

9. The HPLMN of claim 7, wherein the NWDAF FL profile data includes an allowed PLMN parameter that indicates that the NWDAF (106, 206) may share analytics data associated with an analytics ID with a FL server (102, 202) in the allowed PLMN.

10. The HPLMN of claim 7, wherein the NWDAF FL profile data includes a data sensitivity parameter that indicates a data sensitivity level associated with an analytics ID and/or a data privacy parameter that indicates whether analytics data associated an analytics ID is private.

11. The HPLMN of claim 7, wherein the NRF (104, 204) is further configured to:
send an access token request rejection for the NWDAF (106, 206) to the FL server (102, 202) when the access token request for the NWDAF (106, 206) is not authorized.

12. The HPLMN of claim 7, wherein the NWDAF (106, 206) is configured to:
send, to the NRF (104, 204), NWDAF FL profile data including a FL process role parameter;
receive, from the FL server (102, 202), an FL service request including an analytics ID, FL model parameters, and an access token;
verify the access token; and
send a success response indicating that the NWDAF (106, 206) will use its analytics data to train and update an FL machine learning model.

13. The HPLMN of claim 12, wherein the NWDAF (106, 206) is further configured to:
train the FL machine learning model using NWDAF analytics data associated with the analytics ID to update FL machine learning model parameters; and
send, to the FL server (102, 202), updated FL machine learning model parameters.

14. The HPLMN of claim 12 or claim 13 further comprising a unified data management, UDM (108, 208),
wherein the UDM (108, 208) is configured to:
store a VPLMN consent parameter in the data storage, wherein the VPLMN consent parameter indicates whether the VPLMN is authorized;
store a VPLMN analytics consent parameter that indicates whether the NWDAF (106, 206) is authorized to share analytics data with the VPLMN;
receive, from the NWDAF (106, 206), a consent request; and
send, to the NWDAF (106, 206), a consent flag indicating whether the NWDAF (106, 206) is authorized to share analytics data with the FL server (102, 202); and
wherein the NWDAF (106, 206) is further configured to:
send, to the UDM (108, 208), a consent request; and
receive, from the UDM (108, 208) a consent flag indicating whether the NWDAF (106, 206) is authorized to share analytics data with the FL server (102, 202) in the VPLMN,
wherein sending the success response is further based on the consent flag.

15. A method performed by a network repository function (106, 206) to implement an authorization mechanism for a federated learning, FL, training process, **characterized by** that the method comprises:
receiving from a network data analytics function, NWDAF (106, 206), NWDAF FL profile data including a FL process role parameter;
receiving an access token request from an FL server (102, 202) for the NWDAF (106, 206) that is a potential FL client;
determining if the access token request is authorized for the NWDAF (106, 206) based upon the FL profile data; and
sending an access token for the NWDAF (106, 206) to the FL server (102, 202) when the access token request for the NWDAF (106, 206) is authorized.

## Patentansprüche

1. Netzwerkrepositoriumsfunktionsvorrichtung (104, 204), die dazu ausgelegt ist, einen Autorisierungsmechanismus für einen föderativen Lern(FL)-Trainingsprozess zu implementieren, **dadurch gekennzeichnet, dass** sie Mittel für Folgendes umfasst:
Empfangen von Netzwerkdatenanalysefunktions(NWDAF)-FL-Profildaten, die einen FL-Prozessrollenparameter beinhalten, von einer Netzwerkdatenanalysefunktion, (NWDAF) (106, 206);
Empfangen einer Zugangstokenanforderung von einem FL-Server (102, 202) für die NWDAF (106, 206), die ein potenzieller FL-Client ist;
Bestimmen auf Basis der FL-Profildaten, ob die Zugangstokenanforderung für die NWDAF (106, 206) autorisiert ist; und
Senden eines Zugangstokens für die NWDAF (106, 206) an den FL-Server (102, 202), wenn die Zugangstokenanforderung für die NWDAF (106, 206) autorisiert ist.

2. Netzwerkrepositoriumsfunktionsvorrichtung (104, 204) nach Anspruch 1, wobei die NWDAF-FL-Profildaten einen zulässigen FL-Serverparameter beinhalten, der anzeigt, dass die NWDAF (106, 206) Analysedaten, die mit einer Analyse-ID verknüpft sind, mit dem zulässigen FL-Server (102, 202) gemeinsam verwenden kann.

3. Netzwerkrepositoriumsfunktionsvorrichtung (104, 204) nach Anspruch 1, wobei die NWDAF-FL-Profildaten einen zulässigen PLMN-Parameter beinhalten, der anzeigt, dass die NWDAF (106, 206) Analysedaten, die mit einer Analyse-ID verknüpft sind, mit einem FL-Server (102, 202) im zulässigen PLMN gemeinsam verwenden kann.

4. Netzwerkrepositoriumsfunktionsvorrichtung (104, 204) nach Anspruch 1, wobei die NWDAF-FL-Profildaten einen Datenempfindlichkeitsparameter beinhalten, der ein mit einer Analyse-ID verknüpftes Datenempfindlichkeitsmaß anzeigt.

5. Netzwerkrepositoriumsfunktionsvorrichtung (104, 204) nach Anspruch 1, wobei die NWDAF-FL-Profildaten einen Datenschutzparameter beinhalten, der anzeigt, ob mit einer Analyse-ID verknüpfte Analysedaten privat sind.

6. Netzwerkrepositoriumsfunktionsvorrichtung (104, 204) nach Anspruch 1, die ferner Mittel für Folgendes umfasst:
Senden einer Zugangstokenanforderungszurückweisung für die NWDAF (106, 206) an den FL-Server (102, 202), wenn die Zugangstokenanforderung für die NWDAF (106, 206) nicht autorisiert ist.

7. Öffentliches terrestrisches Heimmobilfunknetzwerk, HPLMN, eines 5G-Kernnetzwerks, das dazu ausgelegt ist, einen Autorisierungsmechanismus für einen föderativen Lern-(FL)-Trainingsprozess zu implementieren, und Folgendes umfasst:
eine Netzwerkrepositoriumsfunktion, NRF (104, 204); und
eine Netzwerkdatenanalysefunktion, NWDAF (106, 206);
wobei das HPLMN **dadurch gekennzeichnet ist, dass** die NRF (104, 204) zu Folgendem ausgelegt ist:
Empfangen von NWDAF-FL-Profildaten, die einen FL-Prozessrollenparameter beinhalten, von einer NWDAF (106, 206);
Empfangen einer Zugangstokenanforderung für die NWDAF (106, 206), die ein potenzieller FL-Client ist, von einem FL-Server (102, 202) in einem besuchenden terrestrischen Mobilfunknetzwerk (VPLMN);
Bestimmen auf Basis der FL-Profildaten, ob die Zugangstokenanforderung für die NWDAF (106, 206) autorisiert ist; und
Senden eines Zugangstokens für die NWDAF (106, 206) an den FL-Server (102, 202), wenn die Zugangstokenanforderung für die NWDAF (106, 206) autorisiert ist.

8. HPLMN nach Anspruch 7, wobei die NWDAF-FL-Profildaten einen zulässigen FL-Serverparameter beinhalten, der anzeigt, dass die NWDAF (106, 206) Analysedaten, die mit einer Analyse-ID verknüpft sind, mit dem zulässigen FL-Server (102, 202) gemeinsam verwenden kann.

9. HPLMN nach Anspruch 7, wobei die NWDAF-FL-Profildaten einen zulässigen PLMN-Parameter beinhalten, der anzeigt, dass die NWDAF (106, 206) Analysedaten, die mit einer Analyse-ID verknüpft sind, mit einem FL-Server (102, 202) im zulässigen PLMN gemeinsam verwenden kann.

10. HPLMN nach Anspruch 7, wobei die NWDAF-FL-Profildaten einen Datenempfindlichkeitsparameter beinhalten, der ein Datenempfindlichkeitsmaß beinhaltet, das mit einer Analyse-ID verknüpft ist, und/oder einen Datenschutzparameter, der anzeigt, ob mit der Analyse-ID verknüpfte Analysedaten privat sind.

11. HPLMN nach Anspruch 7, wobei die NRF (104, 204) ferner zu Folgendem ausgelegt ist:
Senden einer Zugangstokenanforderungszurückweisung für die NWDAF (106, 206) an den FL-Server (102, 202), wenn die Zugangstokenanforderung für die NWDAF (106, 206) nicht autorisiert ist.

12. HPLMN nach Anspruch 7, wobei die NWDAF (106, 206) zu Folgendem ausgelegt ist:
Senden von NWDAF-FL-Profildaten, die einen FL-Prozessrollenparameter beinhalten, an die NRF (104, 204);
Empfangen einer FL-Dienstanforderung, die eine Analyse-ID, FL-Modellparameter und ein Zugangstoken beinhaltet, vom FL-Server (102, 202);
Verifizieren des Zugangstokens; und
Senden einer Erfolgsantwort, die anzeigt, dass die NWDAF (106, 206) ihre Analysedaten verwenden wird, um ein FL-Maschinenlernmodell zu trainieren und zu aktualisieren.

13. HPLMN nach Anspruch 12, wobei die NWDAF (106, 206) ferner zu Folgendem ausgelegt ist:
Trainieren des FL-Maschinenlernmodells unter Verwendung von NWDAF-Analysedaten, die mit der Analyse-ID verknüpft sind, um FL-Maschinenlernmodellparameter zu aktualisieren; und
Senden der aktualisierten FL-Maschinenlernmodellparameter an den FL-Server (102, 202).

14. HPLMN nach Anspruch 12 oder Anspruch 13, das ferner eine vereinheitlichte Datenverwaltung, UDM (108, 208) umfasst,
wobei die UDM (108, 208) zu Folgendem ausgelegt ist:
Speichern eines VPLMN-Zustimmungsparameters im Datenspeicher, wobei der VPLMN-Zustimmungsparameter anzeigt, ob das VPLMN autorisiert ist;
Speichern eines VPLMN-Analysezustimmungsparameters, der anzeigt, ob die NWDAF (106, 206) autorisiert ist, Analysedaten mit dem VPLMN gemeinsam zu verwenden;
Empfangen einer Zustimmungsanforderung von der NWDAF (106, 206); und
Senden eines Zustimmungsmarkers, der anzeigt, ob die NWDAF (106, 206) autorisiert ist, Analysedaten mit dem FL-Server (102, 202) gemeinsam zu verwenden, an die NWDAF (106, 206); und
wobei die NWDAF (106, 206) ferner zu Folgendem ausgelegt ist:
Senden einer Zustimmungsanforderung an die UDM (108, 208);
und
Empfangen eines Zustimmungsmarkers, der anzeigt, ob die NWDAF (106, 206) autorisiert ist, Analysedaten mit dem FL-Server (102, 202) im VPLMN gemeinsam zu verwenden, von der UDM (108, 208),
wobei das Senden der Erfolgsantwort ferner auf dem Zustimmungsmarker basiert.

15. Verfahren, das von einer Netzwerkrepositoriumsfunktion (106, 206) durchgeführt wird, um einen Autorisierungsmechanismus für einen föderativen Lern-(FL)-Trainingsprozess zu implementieren, **dadurch gekennzeichnet, dass** das Verfahren Folgendes umfasst:
Empfangen von Netzwerkdatenanalysefunktions(NWDAF)-FL-Profildaten, die einen FL-Prozessrollenparameter beinhalten, von einer Netzwerkdatenanalysefunktion, (NWDAF) (106, 206);
Empfangen einer Zugangstokenanforderung von einem FL-Server (102, 202) für die NWDAF (106, 206), die ein potenzieller FL-Client ist;
Bestimmen auf Basis der FL-Profildaten, ob die Zugangstokenanforderung für die NWDAF (106, 206) autorisiert ist; und
Senden eines Zugangstokens für die NWDAF (106, 206) an den FL-Server (102, 202), wenn die Zugangstokenanforderung für die NWDAF (106, 206) autorisiert ist.

## Revendications

1. Appareil de fonction de référentiel de réseau (104, 204) configuré pour mettre en œuvre un mécanisme d'autorisation pour un processus d'entraînement d'apprentissage fédéré, FL, **caractérisé en ce qu'**il comprend des moyens pour :
recevoir d'une fonction d'analyse de données de réseau, NWDAF (106, 206) des données de profil FL NWDAF comportant un paramètre de rôle de processus FL ;
recevoir une demande de jeton d'accès d'un serveur FL (102, 202) pour la NWDAF (106, 206) qui est un client FL potentiel ;
déterminer si la demande de jeton d'accès est autorisée pour la NWDAF (106, 206) sur la base des données de profil FL ; et
envoyer un jeton d'accès pour la NWDAF (106, 206) au serveur FL (102, 202) lorsque la demande de jeton d'accès pour la NWDAF (106, 206) est autorisée.

2. Appareil de fonction de référentiel de réseau (104, 204) selon la revendication 1, dans lequel les données de profil FL NWDAF comportent un paramètre de serveur FL autorisé qui indique que la NWDAF (106, 206) peut partager des données d'analyse associées à un ID d'analyse avec le serveur FL (102, 202) autorisé.

3. Appareil de fonction de référentiel de réseau (104, 204) selon la revendication 1, dans lequel les données de profil FL NWDAF comportent un paramètre PLMN autorisé qui indique que la NWDAF (106, 206) peut partager des données d'analyse associées à un ID d'analyse avec un serveur FL (102, 202) dans le PLMN autorisé.

4. Appareil de fonction de référentiel de réseau (104, 204) selon la revendication 1, dans lequel les données de profil FL NWDAF comportent un paramètre de sensibilité des données qui indique un niveau de sensibilité de données associé à un ID d'analyse.

5. Appareil de fonction de référentiel de réseau (104, 204) selon la revendication 1, dans lequel les données de profil FL NWDAF comportent un paramètre de confidentialité des données qui indique si les données d'analyse associées à un ID d'analyse sont privées.

6. Appareil de fonction de référentiel de réseau (104, 204) selon la revendication 1, comprenant en outre des moyens pour :
envoyer au serveur FL (102, 202) un rejet de demande de jeton d'accès pour la NWDAF (106, 206) lorsque la demande de jeton d'accès pour la NWDAF (106, 206) n'est pas autorisée.

7. Réseau mobile terrestre public domestique, HPLMN, d'un réseau central 5G configuré pour mettre en œuvre un mécanisme d'autorisation pour un processus d'entraînement d'apprentissage fédéré, FL, comprenant :
une fonction de référentiel de réseau, NRF, (104, 204) ;
et
une fonction d'analyse de données de réseau, NWDAF, (106, 206) ;
dans lequel le HPLMN est **caractérisé en ce que** la NRF (104, 204) est configurée pour :
recevoir de la NWDAF (106, 206) des données de profil FL NWDAF comportant un paramètre de rôle de processus FL ;
recevoir d'un serveur FL (102, 202) dans un réseau mobile terrestre public visiteur (VPLMN), un demande de jeton d'accès pour la NWDAF (106, 206) qui est un client FL potentiel ;
déterminer si la demande de jeton d'accès est autorisée pour la NWDAF (106, 206) sur la base des données de profil FL ; et
envoyer au serveur FL (102, 202) un jeton d'accès pour la NWDAF (106, 206) lorsque la demande de jeton d'accès pour la NWDAF (106, 206) est autorisée.

8. HPLMN selon la revendication 7, dans lequel les données de profil FL NWDAF comportent un paramètre de serveur FL autorisé qui indique que la NWDAF (106, 206) peut partager des données d'analyse associées à un ID d'analyse avec le serveur FL (102, 202) autorisé.

9. HPLMN selon la revendication 7, dans lequel les données de profil FL NWDAF comportent un paramètre PLMN autorisé qui indique que la NWDAF (106, 206) peut partager des données d'analyse associées à un ID d'analyse avec un serveur FL (102, 202) dans le PLMN autorisé.

10. HPLMN selon la revendication 7, dans lequel les données de profil FL NWDAF comportent un paramètre de sensibilité des données qui indique un niveau de sensibilité de données associé à un ID d'analyse et/ou un paramètre de confidentialité des données qui indique si les données d'analyse associées à un ID d'analyse sont privées.

11. HPLMN selon la revendication 7, dans lequel la NRF (104, 204) est en outre configurée pour :
envoyer au serveur FL (102, 202) un rejet de demande de jeton d'accès pour la NWDAF (106, 206) lorsque la demande de jeton d'accès pour la NWDAF (106, 206) n'est pas autorisée.

12. HPLMN selon la revendication 7, dans lequel la NWDAF (106, 206) est configurée pour :
envoyer à la NRF (104, 204) des données de profil FL NWDAF comportant un paramètre de rôle de processus FL ;
recevoir du serveur FL (102, 202) une demande de service FL comportant un ID d'analyse, des paramètres de modèle FL et un jeton d'accès ;
vérifier le jeton d'accès ; et
envoyer une réponse positive indiquant que la NWDAF (106, 206) utilisera ses données d'analyse pour entraîner et mettre à jour un modèle d'apprentissage machine FL.

13. HPLMN selon la revendication 12, dans lequel la NWDAF (106, 206) est en outre configurée pour :
entraîner le modèle d'apprentissage machine FL à l'aide de données d'analyse NWDAF associées à l'ID d'analyse pour mettre à jour des paramètres de modèle d'apprentissage machine FL ; et
envoyer au serveur FL (102, 202) des paramètres de modèle d'apprentissage machine FL mis à jour.

14. HPLMN selon la revendication 12 ou la revendication 13 comprenant en outre une gestion unifiée des données, UDM, (108, 208),
dans lequel l'UDM (108, 208) est configurée pour :
stocker un paramètre de consentement VPLMN dans le stockage de données, dans lequel le paramètre de consentement VPLMN indique si le VPLMN est autorisé ;
stocker un paramètre de consentement d'analyse VPLMN qui indique si la NWDAF (106, 206) est autorisée à partager des données d'analyse avec le VPLMN ;
recevoir de la NWDAF (106, 206) une demande de consentement ; et
envoyer à la NWDAF (106, 206) un drapeau de consentement indiquant si la NWDAF (106, 206) est autorisée à partager des données d'analyse avec le serveur FL (102, 202) ; et
dans lequel la NWDAF (106, 206) est en outre configurée pour :
envoyer à l'UDM (108, 208) une demande de consentement ; et
recevoir de l'UDM (108, 208) un drapeau de consentement indiquant si la NWDAF (106, 206) est autorisée à partager des données d'analyse avec le serveur FL (102, 202) dans le VPLMN,
dans lequel l'envoi de la réponse positive est en outre basé sur le drapeau de consentement.

15. Procédé réalisé par une fonction de référentiel de réseau (106, 206) pour mettre en œuvre un mécanisme d'autorisation pour un processus d'entraînement d'apprentissage fédéré, FL, **caractérisé en ce que** le procédé comprend les étapes suivantes :
recevoir d'une fonction d'analyse de données de réseau, NWDAF, (106, 206) des données de profil FL NWDAF comportant un paramètre de rôle de processus FL ;
recevoir une demande de jeton d'accès d'un serveur FL (102, 202) pour la NWDAF (106, 206) qui est un client FL potentiel ;
déterminer si la demande de jeton d'accès est autorisée pour la NWDAF (106, 206) sur la base des données de profil FL ; et
envoyer un jeton d'accès pour la NWDAF (106, 206) au serveur FL (102, 202) lorsque la demande de jeton d'accès pour la NWDAF (106, 206) est autorisée.
